# EUROPÄISCHE PATENTSCHRIFT

(11) **EP 4 005 038 B1**
(45) Veröffentlichungstag und Bekanntmachung des Hinweises auf die Patenterteilung: **04.09.2024**
(21) Anmeldenummer: 20746195.5
(22) Anmeldetag: 24.07.2020
(51) Int. Cl.: H01S 3/00

(54) **OPTISCHE ANORDNUNG ZUR SPEKTRALEN VERBREITERUNG VON LASERPULSEN, VERFAHREN ZUM SPEKTRALEN VERBREITERN EINES LASERPULSES, VERFAHREN ZUM AUSLEGEN EINES NICHTLINEAREN VERBREITERUNGSELEMENTS, UND KIT MIT EINEM SOLCHEN NICHTLINEAREN VERBREITERUNGSELEMENT**
OPTICAL ARRANGEMENT FOR SPECTRALLY BROADENING LASER PULSES, METHOD FOR SPECTRALLY BROADENING A LASER PULSE, METHOD FOR CONFIGURING A NONLINEAR BROADENING ELEMENT, AND KIT COMPRISING SUCH A NONLINEAR BROADENING ELEMENT
AGENCEMENT OPTIQUE D'ÉLARGISSEMENT SPECTRAL D'IMPULSIONS LASER, PROCÉDÉ D'ÉLARGISSEMENT SPECTRAL D'UNE IMPULSION LASER, PROCÉDÉ DE CONFIGURATION D'UN ÉLÉMENT D'ÉLARGISSEMENT NON LINÉAIRE, ET KIT COMPRENANT UN TEL ÉLÉMENT D'ÉLARGISSEMENT NON LINÉAIRE

(30) Priorität: 26.07.2019 DE 102019211176
(43) Veröffentlichungstag der Anmeldung: 01.06.2022
(73) Patentinhaber: Trumpf Scientific Lasers GmbH & Co. KG, 85774 Unterföhring (DE)
(72) Erfinder: METZGER, Thomas, 80805 München (DE); STARK, Sebastian, 85774 Unterföhring (DE)
(74) Vertreter: Trumpf Patentabteilung
(86) Internationale Anmeldenummer: PCT/EP2020/070990
(87) Internationale Veröffentlichungsnummer: WO 2021/018779

(56) Entgegenhaltungen:
- WO-A1-2014/107804
- DE-A1- 102014 007 159
- GRAZULEVICIUTE I ET AL: "Filamentation and light bullet formation dynamics in solid-state dielectric media with weak, moderate and strong anomalous group velocity dispersion", JOURNAL OF OPTICS, INSTITUTE OF PHYSICS PUBLISHING, BRISTOL GB, vol. 18, no. 2, 21 December 2015 (2015-12-21), pages 25502, XP020297054, ISSN: 2040-8986, [retrieved on 20151221], DOI: 10.1088/2040-8978/18/2/025502

## Beschreibung

Die Erfindung betrifft eine optische Anordnung zur spektralen Verbreiterung von Laserpulsen, ein Verfahren zum spektralen Verbreitern eines Laserpulses und ein Verfahren zum Auslegen eines nichtlinearen Verbreiterungselements.

Aus der DE 10 2014 007 159 A1 sind ein Verfahren und eine Anordnung zur spektralen Verbreiterung von Laserpulsen für die nichtlineare Pulskompression bekannt, wobei die Laserpulse in eine optische Anordnung eingekoppelt werden, in der sie abwechselnd durch wenigstens einen Abschnitt, der wenigstens ein Medium mit nichtlinearen optischen Eigenschaften enthält und in dem die Laserpulse durch Selbstphasenmodulation eine nichtlineare Phase erhalten, und wenigstens einen Abschnitt propagieren, in dem im Wesentlichen keine nichtlineare Phase durch Selbstphasenmodulation erzeugt wird, wobei die Pulsleistung der Laserpulse größer als die kritische Leistung des Mediums mit nichtlinearen optischen Eigenschaften gewählt wird, die mit jedem Durchgang durch das Medium mit nichtlinearen optischen Eigenschaften erzeugte nichtlineare Phase der Laserpulse durch Wahl der Länge des Mediums und der Intensität der Laserpulse so klein eingestellt wird, dass keine katastrophale Selbstfokussierung innerhalb des Mediums auftritt, die Anzahl der Durchgänge zur Erzeugung der nichtlinearen Phase mindestens 10 beträgt und so gewählt wird, dass die Laserpulse beim Austritt aus der Anordnung eine gewünschte nichtlineare Phase aufweisen, und die optische Anordnung so dimensioniert wird, dass der Gouy-Parameter ψ der Anordnung, der die bei einer Propagation durch das Medium mit nichtlinearen optischen Eigenschaften und den Abschnitt ohne Erzeugung einer nichtlinearen Phase von der Grundmode der Anordnung aufgesammelte Gouy-Phase repräsentiert, weder in der Mitte noch direkt am Rand des Stabilitätsbereiches 0 ≤ ψ ≤ π der Anordnung liegt.

Um Laserpulse zeitlich zu verkürzen, wird häufig das Verfahren der nichtlinearen Pulskompression angewendet, wobei Laserpulse zunächst durch Selbstphasenmodulation spektral verbreitert und anschließend zeitlich komprimiert werden. Um einen Laserpuls spektral zu verbreitern, wird dieser durch ein nichtlineares Medium geschickt, wobei eine Kerr-Nichtlinearität auftritt, das heißt eine Änderung des Brechungsindex Δn = n₂I, mit der Intensität I und dem nichtlinearen Brechungsindex n₂. Die Intensität des Laserpulses weist eine zeitliche Einhüllende I(t) auf, wodurch die Phase des Pulses zeitlich schnell moduliert wird, gemäß Φ(t) = kₙΔnL = kₙn₂I(t)L, mit der Wellenzahl kₙ und der Propagationslänge L im Medium. Gemäß dem Zusammenhang *ω* = -*∂*/*∂tΦ*(*t*) werden neue Frequenzen erzeugt. Das Spektrum des Laserpulses wird also bei der Propagation im nichtlinearen Medium kontinuierlich verbreitert. Bei vernachlässigbarer Dispersion bleibt die Pulsform konstant, der Puls wird gechirpt. Anschließend kann der Puls durch Entfernen des Chirps zeitlich komprimiert werden.

Problematisch hierbei ist, dass die Selbstphasenmodulation (SPM) stets in Kombination mit Selbstfokussierung (SF) auftritt. Die Selbstfokussierung führt zu einer Einschnürung des Strahldurchmessers, einer herabgesetzten Strahlqualität bis hin zum völligen Kollaps, insbesondere Filamentation, des Laserpulses.

Der Erfindung liegt die Aufgabe zugrunde, eine optische Anordnung zur spektralen Verbreiterung von Laserpulsen für die nichtlineare Pulskompression, ein Verfahren zum spektralen Verbreitern eines Laserpulses und ein Verfahren zum Auslegen eines nichtlinearen Verbreiterungselements zu schaffen, wobei die genannten Nachteile nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird gelöst, indem eine optische Anordnung zur spektralen Verbreiterung von Laserpulsen für die nichtlineare Pulskompression geschaffen wird, die eine Verbreiterungsstrecke aufweist, die eingerichtet ist, um einen Laserpuls wiederholt oder mehrfach durch mindestens ein nichtlineares Verbreiterungselement zu leiten, wobei das nichtlineare Verbreiterungselement eine Zerstreuungseigenschaft aufweist, die so gewählt ist, dass die Zerstreuungseigenschaft eine Selbstfokussierung des Laserpulses in dem nichtlinearen Verbreiterungselement kompensiert, wobei eine Stirnfläche des nichtlinearen Verbreiterungselements eine konkave Form aufweist und wobei die Zerstreuungseigenschaft durch die konkave Form der Stirnfläche bereitgestellt ist. Dies ermöglicht es insbesondere, eine hohe spektrale Verbreiterung bei zugleich kompakter Bauform zu erreichen, ohne die Strahlqualität durch Selbstfokussierung zumindest in relevantem Maß zu vermindern. Vorteilhaft kann der Strahldurchmesser des Laserpulses konstant, insbesondere kollimiert gehalten werden. Eine starke spektrale Verbreiterung des Spektrums des Laserpulses wird dabei insbesondere erreicht, indem der Laserpuls mehrfach wenigstens ein nichtlineares Verbreiterungselement passiert, was insbesondere auch dadurch realisiert werden kann, dass der Laserpuls eine Mehrzahl von nichtlinearen Verbreiterungselementen, insbesondere zueinander identisch ausgebildete nichtlineare Verbreiterungselemente, nacheinander passiert, wobei jedes nichtlineare Verbreiterungselement die in ihm auftretende Selbstfokussierung aufgrund seiner Zerstreuungseigenschaft kompensiert, beziehungsweise wobei die Selbstfokussierung bei jedem Durchgang durch das nichtlineare Verbreiterungselement kompensiert wird. Dabei ist nicht zwingend vorgesehen, dass der Laserpuls eines der nichtlinearen Verbreiterungselemente, oder alle nichtlinearen Verbreiterungselemente, mehrfach passiert, wenn eine Mehrzahl nichtlinearer Verbreiterungselemente vorgesehen ist. Vielmehr kann der Laserpuls auch jedes der nichtlinearen Verbreiterungselemente nur einmal passieren, soweit mehrere nichtlineare Verbreiterungselemente vorgesehen sind und von dem Laserpuls passiert werden.

Unter einem nichtlinearen Verbreiterungselement wird ein Element, insbesondere optisches Element oder Bauteil, verstanden, welches ein optisch nichtlineares Medium aufweist oder aus einem nichtlinearen Medium besteht, insbesondere derart, dass in dem optischen Element oder Bauteil beim Durchtritt des Laserpulses durch das Element oder Bauteil eine Kerr-Nichtlinearität auftritt, sodass der Laserpuls eine Selbstphasenmodulation und damit eine spektrale Verbreiterung erfährt.

Unter einer Zerstreuungseigenschaft wird insbesondere eine defokussierende Eigenschaft des nichtlinearen Verbreiterungselements verstanden. Das nichtlineare Verbreiterungselement weist also insbesondere eine defokussierende Eigenschaft auf, die so auf die in dem nichtlinearen Verbreiterungselement auftretende Selbstfokussierung abgestimmt ist, dass die Selbstfokussierung durch die defokussierende Eigenschaft des nichtlinearen Verbreiterungselements kompensiert wird. Der Strahl bleibt so zumindest nahezu kollimiert.

Dass die Selbstfokussierung durch die Zerstreuungseigenschaft, insbesondere die defokussierende Eigenschaft, kompensiert wird, bedeutet insbesondere, dass die Selbstfokussierung durch die Zerstreuungseigenschaft, insbesondere durch die defokussierende Eigenschaft, zu mindestens 80 % bis höchstens 120 %, vorzugsweise zu mindestens 90 % bis höchstens 110 %, vorzugsweise zu mindestens 95 % bis höchstens 105 %, vorzugsweise zu mindestens 99 % bis höchstens 101 %, vorzugsweise genau, das heißt zu 100 %, ausgeglichen wird. Somit wird ein Kollaps, insbesondere eine Filamentation, des Laserpulses wirksam verhindert.

Vorzugsweise ist das wenigstens eine nichtlineare Verbreiterungselement eingerichtet, zusätzlich eine Selbstfokussierung zu kompensieren, die der Laserpuls in wenigstens einem Medium erfährt, das in einer Umgebung des nichtlinearen Verbreiterungselements angeordnet ist, oder in dem das nichtlineare Verbreiterungselement angeordnet ist. Dabei kann es sich um ein gasförmiges, flüssiges oder auch festes Medium oder auch um eine Mehrzahl von Medien handeln.

Die hier vorgeschlagene optische Anordnung ist vorteilhaft in der Lage, den Laserpuls zumindest nahezu konstant, vorzugsweise konstant kollimiert zu halten. Sie ist darüber hinaus bauraumsparend, insbesondere klein, kostengünstig und kompakt realisierbar. Die optische Anordnung ist leicht zu höheren Pulsenergien und mittleren Leistungen skalierbar. Sie ist insbesondere anwendbar mit Laserpulsen, deren zeitliche Ausdehnung zwischen einer ps und wenigen 10 fs liegt. Es ist möglich, mittels Nonlinear Ellipse Rotation den Kontrast zu verbessern. Die optische Anordnung kann insbesondere bei geeigneter Antireflexbeschichtung des mindestens einen nichtlinearen Verbreiterungselements vorteilhaft annähernd frei von optischen Verlusten sein.

Gemäß einer Weiterbildung der Erfindung ist vorgesehen, dass die Verbreiterungsstrecke eingerichtet ist, um den Laserpuls a) mehrfach durch das mindestens eine nichtlineare Verbreiterungselement, oder b) einmalig durch eine Mehrzahl der nichtlinearen Verbreiterungselemente, die bevorzugt voneinander beabstandet angeordnet sind, zu leiten. Es ist auch möglich, dass die nichtlinearen Verbreiterungselemente direkt aneinander anliegen. Wie bereits zuvor ausgeführt, kann also das wiederholte Leiten des Laserpulses durch das mindestens eine nichtlineare Verbreiterungselement insbesondere verwirklicht werden, indem derselbe Laserpuls mehrfach durch das mindestens eine nichtlineare Verbreiterungselement gesendet wird, oder indem der Laserpuls - insbesondere einmalig - durch eine Mehrzahl nichtlinearer Verbreiterungselemente geführt wird, wobei diese nichtlinearen Verbreiterungselemente - in Propagationsrichtung des Laserpulses - bevorzugt voneinander beabstandet angeordnet sind. Es bedarf also nicht zwingend eines mehrfachen Durchgangs des Laserpulses durch ein und dasselbe nichtlineare Verbreiterungselement, wobei eine solche Ausgestaltung aber auch nicht ausgeschlossen ist.

Die optische Anordnung kann insbesondere sechs, sieben, acht, neun, zehn, oder mehr als zehn nichtlineare Verbreiterungselemente aufweisen.

Weist die optische Anordnung eine Mehrzahl nichtlinearer Verbreiterungselemente auf, weist bevorzugt jedes nichtlineare Verbreiterungselement der Mehrzahl nichtlinearer Verbreiterungselemente eine Zerstreuungseigenschaft auf, die jeweils so gewählt ist, dass diese Zerstreuungseigenschaft die Selbstfokussierung des Laserpulses in dem jeweiligen nichtlinearen Verbreiterungselement kompensiert.

Eine geeignete Obergrenze für die Anzahl nichtlinearer Verbreiterungselemente in der Verbreiterungsstrecke ist beispielsweise zehn, wobei die genaue Zahl insbesondere von der in Ausbreitungsrichtung des Laserpulses gemessenen Dicke der nichtlinearen Verbreiterungselemente abhängt. Eine Hinzufügung weiterer Verbreiterungselemente führt nicht notwendig zu einer weiteren spektralen Verbreiterung, da die in dem Material der nichtlinearen Verbreiterungselemente auftretende Dispersion zu einer zunehmenden zeitlichen Verbreiterung des Laserpulses und damit zu einer Abnahme der momentanen Intensität führt, was schließlich die Selbstphasenmodulation zum Erliegen bringt. Selbstverständlich ist eine geeignete Obergrenze für die Anzahl nichtlinearer Verbreiterungselemente auch dann erreicht, wenn die gewünschte spektrale Verbreiterung durch Selbstphasenmodulation erreicht ist.

Das nichtlineare Verbreiterungselement weist seine Zerstreuungseigenschaft aufgrund einer konkaven Form einer Stirnfläche des nichtlinearen Verbreiterungselements auf. Dies stellt eine besonders einfache und einfach sowie kostengünstig herstellbare Ausgestaltung des nichtlinearen Verbreiterungselements einschließlich seiner Zerstreuungseigenschaft dar. Eine Stirnfläche des nichtlinearen Verbreiterungselements ist dabei insbesondere eine Fläche, durch die der die Verbreiterungsstrecke durchlaufende Laserpuls bestimmungsgemäß hindurchtritt, insbesondere also eine Strahleintrittsfläche oder eine Strahlaustrittsfläche des nichtlinearen Verbreiterungselements. Vorzugsweise ist die Zerstreuungseigenschaft durch eine konkave Form der Strahleintrittsfläche und/oder der Strahlaustrittsfläche, besonders bevorzugt durch eine konkave Form der Strahleintrittsfläche des nichtlinearen Verbreiterungselements gegeben. Ganz besonders bevorzugt weist lediglich die Strahleintrittsfläche eine zumindest bereichsweise konkave Formgebung auf, während bevorzugt die Strahlaustrittsfläche zugleich eine plane Geometrie aufweist. Die konkave Form der Stirnfläche kann beim Herstellen des nichtlinearen Verbreiterungselements mit erzeugt oder eingebracht werden. Es ist aber auch möglich, dass die konkave Form nachträglich in die Stirnfläche eingebracht oder an der Stirnfläche erzeugt wird, insbesondere durch Fräsen, vorzugsweise mittels eines Diamant-Fräswerkzeugs, Läppen oder und/oder Polieren.

Alternativ oder zusätzlich ist es auch möglich, dass das nichtlineare Verbreiterungselement seine Zerstreuungseigenschaft durch eine - insbesondere strahleintrittsseitig und/oder strahlaustrittsseitig angeordnete - holographische oder gitterähnliche Struktur aufweist. In diesem Fall ist es möglich, dass die Stirnseiten des nichtlinearen Verbreiterungselements plan ausgebildet sind. Die holographische oder gitterähnliche Struktur kann - insbesondere bereichsweise, das heißt lokal - im Volumen des nichtlinearen Verbreiterungselements ausgebildet sein.

Alternativ oder zusätzlich kann auch zumindest eine Stirnseite des nichtlinearen Verbreiterungselements die Struktur einer Fresnel-Linse aufweisen oder nach Art einer Fresnel-Linse ausgebildet sein, um die Zerstreuungseigenschaft bereitzustellen.

Alternativ oder zusätzlich kann auch ein als Folie ausgebildetes nichtlineares Verbreiterungselement gestreckt werden, um die Zerstreuungseigenschaft bereitzustellen.

Gemäß einer Weiterbildung der Erfindung ist vorgesehen, dass die Stirnfläche des nichtlinearen Verbreiterungselements auf das räumliche Intensitätsprofil des Laserpulses in der Querschnittsebene des Laserstrahls abgestimmt ist, insbesondere dem räumlichen Profil des Laserpulses in der Querschnittsebene - gegebenenfalls bis auf einen Skalierungsfaktor - entspricht oder proportional zu dem Intensitätsprofil ausgestaltet ist. Die Form der Stirnfläche ist somit insbesondere abgestimmt auf ein bestimmtes Intensitätsprofil des Laserpulses, mit welchem das nichtlineare Verbreiterungselement bestimmungsgemäß verwendet wird. Dies ermöglicht eine Anpassung der lokalen Zerstreuung, insbesondere Defokussierung, an die lokale Intensität, wobei insbesondere solche Bereiche des Laserprofils, in denen aufgrund hoher Intensität eine starke Selbstfokussierung zu erwarten ist, stärker zerstreut, insbesondere defokussiert werden, als solche Bereiche, insbesondere Randbereiche, des Intensitätsprofils, in denen aufgrund geringerer Intensität nur eine geringere oder sogar keine Selbstfokussierung zu erwarten ist. Auf diese Weise kann die Selbstfokussierung des Laserpulses auf besonders vorteilhafte Weise und insbesondere ohne zusätzliche räumliche Verbreiterung des Laserstrahls in solchen Bereichen des Profils, in denen eine geringe oder keine Selbstfokussierung auftritt, vermindert oder sogar verhindert werden. Somit wird bevorzugt eine besonders hohe Strahlqualität erzeugt oder beibehalten.

In besonders bevorzugter Weise ist die Stirnfläche des nichtlinearen Verbreiterungselements gaußförmig geformt. Insbesondere weist sie ein Gaußprofil auf, besonders bevorzugt das Gaußprofil eines Laserpulses, zu dessen spektraler Verbreiterung das nichtlineare Verbreiterungselement bestimmungsgemäß vorgesehen, und auf dessen Intensitätsprofil es entsprechend abgestimmt ist. Dabei werden insbesondere Ausläufer des Intensitätsprofil weniger stark defokussiert als zentrale Bereiche, sodass die Zerstreuungseigenschaft des nichtlinearen Verbreiterungselements auf die lokalen Intensitätsverhältnisse und damit die lokalen selbstfokussierenden Eigenschaften des Laserpulses in dem nichtlinearen Verbreiterungselement abgestimmt sind.

Gemäß einer Weiterbildung der Erfindung ist vorgesehen, dass das mindestens eine nichtlineare Verbreiterungselement in Vakuum angeordnet ist. Die optische Anordnung, insbesondere die Verbreiterungsstrecke, kann somit zumindest bereichsweise evakuiert sein. Dies ermöglicht in vorteilhafter Weise die Unterdrückung störender Einflüsse eines gasförmigen Mediums. Die Strahlführung ist typischerweise sowieso bereichsweise unter Vakuum angeordnet, so dass es in diesem Fall eine besonders einfache Ausgestaltung darstellt, das mindestens eine nichtlineare Verbreiterungselement ebenfalls im Vakuum anzuordnen.

Alternativ ist bevorzugt vorgesehen, dass das mindestens eine nichtlineare Verbreiterungselement in einem gasförmigen oder flüssigen Medium angeordnet ist. Auf diese Weise kann die optische Anordnung, insbesondere die Verbreiterungsstrecke, technisch einfacher und kostengünstiger ausgestaltet sein, als wenn sie zumindest bereichsweise evakuiert ist. Das gasförmige Medium kann insbesondere Luft, ein inertes Gas, wie beispielsweise Stickstoff oder Kohlendioxid, oder ein Edelgas, oder ein Gemisch aus wenigstens zwei der zuvor genannten Gase, sein. Es ist auch möglich, dass ein festes Medium, beispielsweise ein Glaskörper, zwischen zwei nichtlinearen Verbreiterungselementen angeordnet ist.

Gemäß einer Weiterbildung der Erfindung ist vorgesehen, dass die optische Anordnung eine Mehrzahl von Verbreiterungsstrecken aufweist, wobei zwischen je zwei Verbreiterungsstrecken eine Pulskompressionseinrichtung zur zeitlichen Kompression des Laserpulses angeordnet ist. Dies entspricht einer Kaskadierung der optischen Anordnung, insbesondere einer Kaskadierung der Verbreiterungsstrecke, wobei jeweils das wenigstens eine nichtlineare Verbreiterungselement einer einzelnen Verbreiterungsstrecke ein verbreitertes Spektrum erzeugt, welches dann durch eine Pulskompressionseinrichtung zu einem zeitlich kürzeren Laserpuls komprimiert wird, der dann wiederum durch die nachfolgende Verbreiterungsstrecke spektral verbreitert und anschließend wiederum komprimiert wird, wobei dies so mehrfach, grundsätzlich ad infinitum, fortgesetzt werden kann. Auf diese Weise können besonders kurze Laserpulse erhalten werden. Hierdurch kann insbesondere die bereits erwähnte inhärente Beschränkung umgangen werden, die sich daraus ergibt, dass nach einem mehrmaligen Durchlaufen nichtlinearer Verbreiterungselemente die zeitliche Pulsdauer des Laserpulses durch Dispersion so lang geworden ist, dass keine weitere Selbstphasenmodulation mehr auftritt. Die zwischengeschaltete Pulskompression führt zu einer zeitlichen Verkürzung des Laserpulses, sodass auch in der nachgeschalteten Verbreiterungsstrecke Selbstphasenmodulation auftritt.

Die Pulskompressionseinrichtung kann insbesondere wenigstens einen gechirpten Spiegel, wenigstens ein Gitter, oder wenigstens ein anderes geeignetes dispersives Element, insbesondere eine Kombination von wenigstens zwei der genannten Elemente, aufweisen.

Gemäß einer Weiterbildung der Erfindung ist vorgesehen, dass das wenigstens eine nichtlineare Verbreiterungselement als plattenförmiges Element, insbesondere als Plättchen, oder als Folie ausgebildet ist. Dies stellt eine besonders kompakte, einfache und kostengünstige Ausgestaltung des nichtlinearen Verbreiterungselements dar. In bevorzugter Ausgestaltung ist das nichtlineare Verbreiterungselement bevorzugt als Glasplättchen, Kristallplättchen oder Komposit-Plättchen aus verschiedenen Materialien, vorzugsweise gesintert, ausgebildet. Bevorzugt kann das nichtlineare Verbreiterungselement Fused Silica aufweisen oder aus Fused Silica bestehen.

Gemäß einer Weiterbildung der Erfindung ist vorgesehen, dass das wenigstens eine nichtlineare Verbreiterungselement in Strahlausbreitungsrichtung des Laserpulses, das heißt in Propagationsrichtung, eine Stärke von mindestens 2 mm, vorzugsweise von mindestens 10 mm bis höchstens 50 mm, vorzugsweise von mindestens 15 mm bis höchstens 40 mm, aufweist. Auf diese Weise kann die optische Anordnung sehr kompakt ausgestaltet sein. Vorzugsweise weist die konkave Form der Stirnfläche des wenigstens einen nichtlinearen Verbreiterungselements eine Ausdehnung in Strahlausbreitungsrichtung, das heißt in Propagationsrichtung, von mindestens 1 µm bis höchstens 100 µm, vorzugsweise von mindestens 10 µm bis höchstens 40 µm, vorzugsweise von mindestens 15 µm bis höchstens 30 µm, vorzugsweise 20 µm, auf. Die Ausdehnung der konkaven Form wird dabei bevorzugt gemessen von einem äußersten Punkt der Stirnfläche bis zu einem Minimum der konkaven Form, beispielsweise insbesondere ausgehend von einem äußersten Ausläufer eines Gaußprofils bis zum Maximum des Gaußprofils, welches zugleich dem Minimum der gaußförmigen Vertiefung als konkaver Form entspricht. Jedenfalls ist die Ausdehnung der konkaven Form der Stirnfläche bevorzugt sehr viel kleiner, als es der Stärke des nichtlinearen Verbreiterungselements in Strahlausbreitungsrichtung entspricht.

Insbesondere weist die Zerstreuungseigenschaft des nichtlinearen Verbreiterungselements bevorzugt eine große negative Fokuslänge oder Brennweite, insbesondere von mehreren Metern, insbesondere von mehreren 10 Metern, beispielsweise von 20 m oder 22 m auf. Die Zerstreuungseigenschaft, insbesondere die defokussierende Eigenschaft, des nichtlinearen Verbreiterungselements ist also gering ausgeprägt und eben gerade nur so gewählt, dass die Selbstfokussierung des Laserpulses in dem nichtlinearen Verbreiterungselement kompensiert wird. Das nichtlineare Verbreiterungselement weist darüber hinaus bevorzugt keine defokussierenden oder fokussierenden Eigenschaften, insbesondere keine Linseneigenschaften, auf.

Die Aufgabe wird auch gelöst, indem ein Verfahren zum spektralen Verbreitern eines Laserpulses für die nichtlineare Pulskompression geschaffen wird, wobei ein Laserpuls wiederholt oder mehrfach durch mindestens ein nichtlineares Verbreiterungselement geleitet wird. Das nichtlineare Verbreiterungselement weist dabei eine Zerstreuungseigenschaft auf, die so gewählt ist, dass die Zerstreuungseigenschaft eine Selbstfokussierung des Laserpulses in dem nichtlinearen Verbreiterungselement kompensiert, wobei eine Stirnfläche des nichtlinearen Verbreiterungselements eine konkave Form aufweist und wobei die Zerstreuungseigenschaft durch die konkave Form der Stirnfläche bereitgestellt ist. Dies bedeutet wiederum, dass im Rahmen des Verfahrens die in dem nichtlinearen Verbreiterungselement auftretende Selbstfokussierung durch die Zerstreuungseigenschaft des nichtlinearen Verbreiterungselements kompensiert wird. Im Rahmen des Verfahrens ergeben sich insbesondere die Vorteile, die bereits in Zusammenhang mit der optischen Anordnung erläutert wurden. Insbesondere wird im Rahmen des Verfahrens bevorzugt eine erfindungsgemäße optische Anordnung oder eine optische Anordnung nach einem der zuvor beschriebenen Ausführungsbeispiele verwendet.

Der Laserpuls kann bevorzugt zeitlich durch einen Chirp verbreitert, also quasi vorgechirpt werden, bevor er durch das mindestens eine nichtlineare Verbreiterungselement geleitet wird.

Dass der Laserpuls wiederholt durch das mindestens eine nichtlineare Verbreiterungselement geleitet wird, schließt insbesondere ein, dass der Laserpuls entweder mehrfach durch das mindestens eine nichtlineare Verbreiterungselement geleitet wird, oder dass er einmalig durch eine Mehrzahl - bevorzugt voneinander beabstandet angeordneter oder unmittelbar aneinander anliegender - nichtlinearer Verbreiterungselemente geleitet wird. Dabei ist nicht zwingend vorgesehen, dass der Laserstrahl ein und dasselbe nichtlineare Verbreiterungselement mehrfach passiert. Eine solche Ausgestaltung ist aber möglich. Gemäß einer bevorzugten Ausgestaltung kann der Laserpuls das mindestens eine nichtlineare Verbreiterungselement im Doppeldurchgang passieren, wenn das nichtlineare Verbreiterungselement an seiner bevorzugt planen, strahlabgewandten Rückseite reflektierend beschichtet ist.

Die Aufgabe wird auch gelöst, indem ein Verfahren zum Auslegen eines nichtlinearen Verbreiterungselements zur Verwendung in einer erfindungsgemäßen optischen Anordnung oder einer optischen Anordnung nach einem der zuvor beschriebenen Ausführungsbeispiele, oder zur Verwendung in einem erfindungsgemäßen Verfahren zum spektralen Verbreitern eines Laserpulses oder einer Ausführungsform des Verfahrens zum spektralen Verbreitern des Laserpulses, geschaffen wird. Dabei wird für einen bestimmten Laserpuls eine Stärke für das nichtlineare Verbreiterungselement festgelegt. Eine Stärke des nichtlinearen Verbreiterungselements ist dabei insbesondere dessen Ausdehnung oder Dicke in Ausbreitungsrichtung des Laserpulses, das heißt in Propagationsrichtung gemessen. Für den bestimmten Laserpuls wird eine Selbstfokussierung in dem nichtlinearen Verbreiterungselement, welches die festgelegte Stärke aufweist, ermittelt, insbesondere berechnet oder simuliert, oder experimentell bestimmt. Für das nichtlineare Verbreiterungselement wird eine Zerstreuungseigenschaft so bestimmt, dass die Zerstreuungseigenschaft die Selbstfokussierung des Laserpulses in dem nichtlinearen Verbreiterungselement kompensiert, wobei die Zerstreuungseigenschaft als konkave Form an einer Stirnfläche des nichtlinearen Verbreiterungselements ausgebildet wird. Die so bestimmte Zerstreuungseigenschaft wird an dem nichtlinearen Verbreiterungselement ausgebildet. Auf diese Weise wird insbesondere ein nichtlineares Verbreiterungselement erhalten, welches zur Verwendung in einer entsprechenden optischen Anordnung oder einem entsprechenden Verfahren zur spektralen Verbreiterung geeignet und eingerichtet ist.

Vorzugsweise wird beim Auslegen des wenigstens einen nichtlinearen Verbreiterungselements zusätzlich eine Selbstfokussierung berücksichtigt, die der Laserpuls in wenigstens einem Medium erfährt, das bestimmungsgemäß in einer Umgebung des nichtlinearen Verbreiterungselements angeordnet ist, oder in dem das nichtlineare Verbreiterungselement bestimmungsgemäß angeordnet wird. Dabei kann es sich um ein gasförmiges, flüssiges oder auch festes Medium oder auch um eine Mehrzahl von Medien handeln. Diese Selbstfokussierung wird bevorzugt zusätzlich durch das entsprechend ausgelegte nichtlineare Verbreiterungselement kompensiert.

Unter einem Auslegen des nichtlinearen Verbreiterungselements wird insbesondere ein Festlegen der Ausgestaltung, insbesondere der räumlich-geometrischen Ausgestaltung des nichtlinearen Verbreiterungselements, verstanden.

Unter einem bestimmten Laserpuls wird hier insbesondere ein Laserpuls verstanden, der bezüglich seiner Parameter festgelegt ist, insbesondere bezüglich seiner Wellenlänge oder der spektralen Zusammensetzung, seinem räumlichen Intensitätsprofil in der Querschnittsebene senkrecht zur Ausbreitungsrichtung, seinem zeitlichen Intensitätsprofil, das heißt der zeitlichen Einhüllenden des Intensitätsverlaufs I(t), und/oder seiner zeitlichen Pulsbreite, der Pulsleistung und/oder der Pulsenergie.

Die Zerstreuungseigenschaft für das nichtlineare Verbreiterungselement wird bevorzugt durch Berechnung, besonders bevorzugt durch Simulation, bestimmt. Es ist aber auch eine experimentelle Bestimmung möglich

Die Zerstreuungseigenschaft wird an dem nichtlinearen Verbreiterungselement bevorzugt durch spanabhebendes Bearbeiten von wenigstens einer Stirnfläche des nichtlinearen Verbreiterungselements, insbesondere durch Fräsen, insbesondere durch Fräsen mit einem Diamant-Werkzeug, und/oder durch Läppen und/oder Polieren, ausgebildet. Alternativ oder zusätzlich ist es aber auch möglich, dass die Zerstreuungseigenschaft bei der Herstellung des nichtlinearen Verbindungselements mit eingebracht oder erzeugt wird, beispielsweise durch entsprechende Formgebung beim Gießen oder durch Pressen.

Die Zerstreuungseigenschaft wird als konkave Form an einer Stirnfläche des nichtlinearen Verbreiterungselements ausgebildet. Insbesondere wird dabei die Form der Stirnfläche bevorzugt auf das räumliche Intensitätsprofil des Laserpulses in der Querschnittsebene senkrecht zur Ausbreitungsrichtung abgestimmt, insbesondere wird die Form entsprechend des räumlichen Intensitätsprofils gewählt. Besonders bevorzugt wird die Zerstreuungseigenschaft als gaußförmige Form an der Stirnfläche des nichtlinearen Verbreiterungselements ausgebildet, insbesondere falls der Laserpuls ein grundmodiger Puls ist (TEM00 bzw. beugungsbegrenzter Puls).

Bei einer bevorzugten Ausführungsform des Verfahrens wird die Ausdehnung der Zerstreuungseigenschaft, insbesondere der konkaven Form, der Stirnfläche des Verbreiterungselements in Strahlausbreitungsrichtung auf mindestens 5 µm beschränkt. Dies ermöglicht vorteilhaft eine einfache und kostengünstige Fertigung des Verbreiterungselements. Darüber hinaus wird die Stärke des Verbreiterungselements in Strahlausbreitungsrichtung vorzugsweise auf höchstens 50 mm beschränkt. Die Stärke des Verbreiterungselements und die Ausdehnung der Zerstreuungseigenschaft werden bevorzugt so aufeinander und auf einen bestimmten, mit dem Verbreiterungselement zu verwendenden Laserstrahl abgestimmt, dass die minimale Ausdehnung der Zerstreuungseigenschaft nicht unterschritten wird. Überschreitet für einen mit dem Verbreiterungselement zu verwendenden bestimmten Laserstrahl - beispielsweise aufgrund einer niedrigen Energie und/oder einem großem Strahldurchmesser des bestimmten Laserstrahls - die abgestimmte Stärke des Verbreiterungselements die maximale Stärke, wird bevorzugt eine Stärke für mindestens ein zusätzliches AR-beschichtetes, das heißt antireflexbeschichtetes, Element festgelegt, oder es wird entsprechend eine Anzahl von zusätzlichen AR-beschichteten Elementen bestimmter Stärke festgelegt, wobei die Stärke des mindestens einen zusätzlichen AR-beschichteten Elements oder eine Summe der Stärken der Anzahl zusätzlicher AR-beschichteter Elemente als Differenz der ermittelten Stärke des Verbreiterungselements und der maximalen Stärke des Verbreiterungselements ermittelt wird.

Gemäß einer Weiterbildung der Erfindung ist vorgesehen, dass die Zerstreuungseigenschaft auf das Intensitätsprofil des bestimmten Laserpulses abgestimmt wird. Insbesondere wird die Zerstreuungseigenschaft entsprechend dem Intensitätsprofil, insbesondere proportional zu dem Intensitätsprofil oder identisch mit dem Intensitätsprofil des bestimmten Laserpulses gewählt.

Ferner wird ein Kit offenbart, welches ein nichtlineares Verbindungselement aufweist, das eine Zerstreuungseigenschaft aufweist, die so auf einen bestimmten Laserpuls abgestimmt ist, dass die Zerstreuungseigenschaft eine Selbstfokussierung des bestimmten Laserpulses in dem nichtlinearen Verbindungselement kompensiert. Das Kit weist außerdem einen Verwendungshinweis auf, der wenigstens eine Anweisung zur Verwendung des nichtlinearen Verbreiterungselements mit dem bestimmten Laserpuls umfasst. Insbesondere manifestiert sich in dem Verwendungshinweis die Abstimmung der Zerstreuungseigenschaft auf die Eigenschaften des bestimmten Laserpulses. Der Verwender des Kits, insbesondere des nichtlinearen Verbreiterungselements, wird also durch den Verwendungshinweis darauf hingewiesen, dass das nichtlineare Verbreiterungselement mit dem bestimmten Laserpuls, der insbesondere durch die oben genannten Eigenschaften definiert ist, zu verwenden ist.

Bei einem Ausführungsbeispiel des Kits weist die Zerstreuungseigenschaft, insbesondere die konkave Form, des Verbreiterungselements in Strahlausbreitungsrichtung eine minimale Ausdehnung von 5 µm auf. Vorzugsweise weist das Verbreiterungselement eine maximale Stärke von 50 mm auf. Das Kit weist außerdem mindestens ein AR-beschichtetes Element mit bestimmter Stärke und ohne Zerstreuungseigenschaft auf. Insbesondere kann mittels des mindestens einen AR-beschichteten Elements ohne Zerstreuungseigenschaft die Selbstfokussierung des Laserpulses erhöht werden, wenn für einen bestimmten Laserstrahl die Zerstreuungseigenschaft des Verbreiterungselements mit minimaler Ausdehnung zu ausgeprägt ist, bezogen auf die maximale Stärke des Verbreiterungselements und die sich daraus ergebende Selbstfokussierung.

Gemäß einer Weiterbildung ist vorgesehen, dass das nichtlineare Verbreiterungselement des Kits eine Zerstreuungseigenschaft aufweist, die auf das Intensitätsprofil des bestimmten Laserpulses in der Querschnittsebene senkrecht zur Ausbreitungsrichtung desselben abgestimmt ist. Insbesondere ist die Zerstreuungseigenschaft proportional zu dem Intensitätsprofil oder identisch zu dem Intensitätsprofil ausgestaltet.

Insbesondere weist das Kit ein nichtlineares Verbreiterungselement auf, wie es zuvor in Zusammenhang mit der optischen Anordnung beschrieben wurde.

In Zusammenhang mit dem Kit verwirklichen sich insbesondere die Vorteile, die bereits in Zusammenhang mit der optischen Anordnung, dem Verfahren zum spektralen Verbreitern, und dem Verfahren zum Auslegen des nichtlinearen Verbreiterungselements erwähnt wurden.

Die Erfindung wird im Folgenden anhand der Zeichnung näher erläutert. Dabei zeigen:
- Figur 1: eine schematische Darstellung eines Ausführungsbeispiels einer optischen Anordnung zur spektralen Verbreiterung von Laserpulsen sowie deren Wirkung auf das Spektrum eines Laserpulses;
- Figur 2: eine schematische Darstellung des Funktionsprinzips eines nichtlinearen Verbreiterungselements der optischen Anordnung;
- Figur 3: eine schematische Darstellung eines Effekts der optischen Anordnung, und
- Figur 4: eine schematische Darstellung eines Ausführungsbeispiels eines Kits mit einem nichtlinearen Verbreiterungselement.

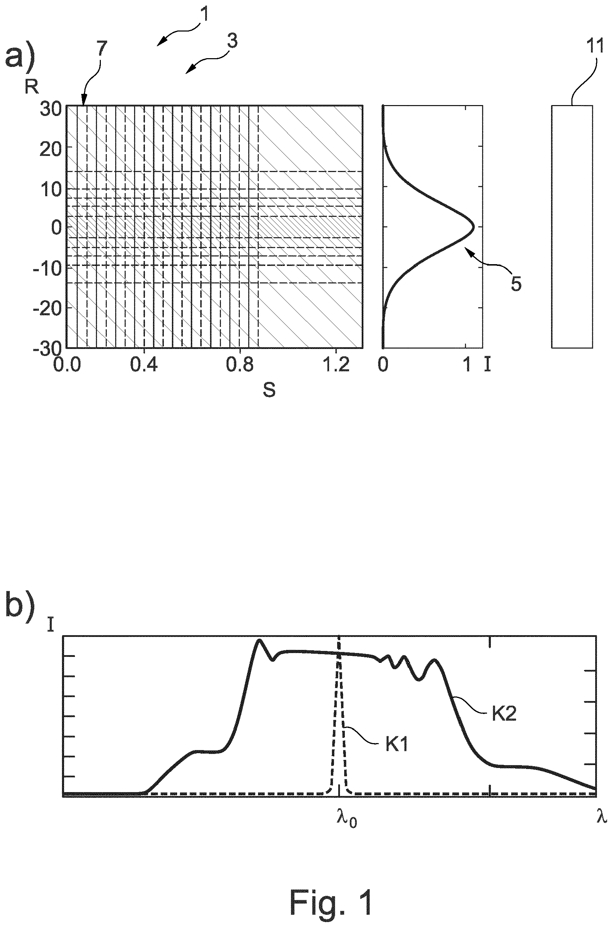

**Fig. 1** zeigt eine schematische Darstellung eines Ausführungsbeispiels einer optischen Anordnung 1 zur spektralen Verbreiterung von Laserpulsen für die nichtlineare Pulskompression. Dabei ist bei a) die optische Anordnung 1 dargestellt, die eine Verbreiterungsstrecke 3 aufweist, die eingerichtet ist, um einen schematisch dargestellten Laserpuls 5 wiederholt oder mehrfach durch mindestens ein nichtlineares Verbreiterungselement 7 zu leiten. Bei dem hier dargestellten Ausführungsbeispiel weist die Verbreiterungsstrecke 3 zehn nichtlineare Verbreiterungselemente 7 auf, von denen der besseren Übersichtlichkeit wegen nur das in Propagationsrichtung des Laserpulses 5, das heißt von links nach rechts gesehen, erste nichtlineare Verbreiterungselement 7 mit dem entsprechenden Bezugszeichen bezeichnet ist. Die nichtlinearen Verbreiterungselemente 7 sind dabei jeweils schematisch dargestellt durch eine jeweils linksseitige, durchgezogene vertikale Linie und eine rechtsseitige, gestrichelte Linie, welche die Begrenzungen der jeweiligen nichtlinearen Verbreiterungselemente 7 in Propagationsrichtung darstellen. Dabei wird deutlich, dass die zehn nichtlinearen Verbreiterungselemente 7 hier voneinander beabstandet angeordnet sind.

In Figur 1a) ist außerdem der Radius R des Laserpulses 5 aufgetragen gegen die Propagationsstrecke s. Weiterhin ist in dem rechten Teil des Diagramms von Figur 1a) das Intensitätsprofil I des Laserpulses 5 in der Ebene senkrecht zur Propagationsrichtung, das heißt in Abhängigkeit von dem Radius R dargestellt. Dabei zeigt sich, dass der Laserpuls 5 hier ein gaußförmiges Intensitätsprofil aufweist.

Bei b) ist dargestellt, dass das Spektrum des Laserpulses 5 beim Durchlaufen der Verbreiterungsstrecke 3 verbreitert wird. Dabei ist hier die Intensität I des Laserpulses 5 aufgetragen gegen die Wellenlänge λ. Als gestrichelte, erste Kurve K1 ist das Spektrum des Laserpulses 5 vor Durchlaufen der Verbreiterungsstrecke 3, das heißt vor Eintritt in das erste nichtlineare Verbreiterungselement 7 dargestellt, wobei dieses vergleichsweise eng um eine Zentralwellenlänge λ₀ konzentriert ist. Das Spektrum des Laserpulses 5 nach Durchlaufen der Verbreiterungsstrecke 3 ist durch eine zweite, durchgezogene Kurve K2 dargestellt, wobei deutlich wird, dass das Spektrum des Laserpulses 5 durch das Passieren der nichtlinearen Verbreiterungselemente 7 deutlich verbreitert wird.

Dies beruht auf der Selbstphasenmodulation des Laserpulses 5 aufgrund einer Kerr-Nichtlinearität beim Durchlaufen des nichtlinearen Mediums der Verbreiterungselemente 7.

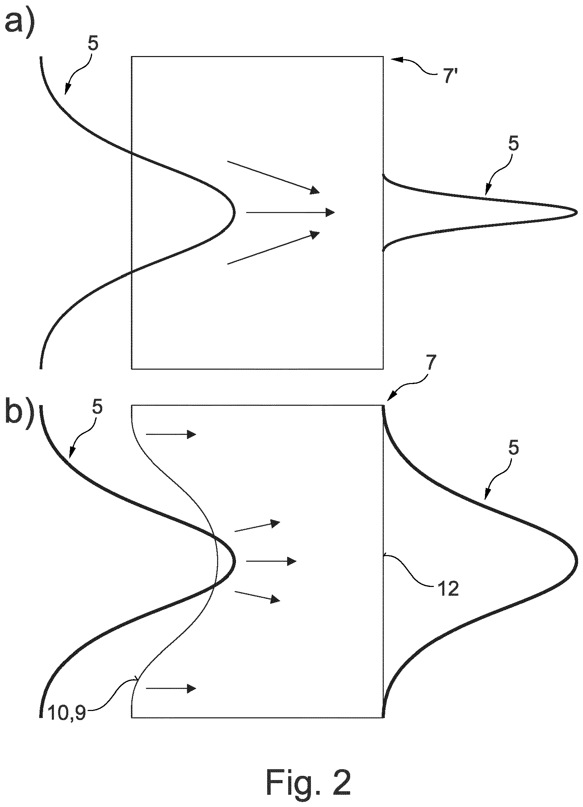

**Fig. 2** zeigt eine schematische Darstellung der Funktionsweise der optischen Anordnung 1.

Gleiche und funktionsgleiche Elemente sind in allen Figuren jeweils mit gleichen Bezugszeichen versehen, sodass jeweils auf die vorhergehende Beschreibung verwiesen wird.

Bei a) ist ein herkömmliches nichtlineares Verbreiterungselement 7` schematisch dargestellt. Durchläuft der Laserpuls 5 das herkömmliche Verbreiterungselement 7`, erfährt er neben der Selbstphasenmodulation eine unkorrigierte Selbstfokussierung, wodurch das radiale Intensitätsprofil schmaler wird. Dies kann insbesondere beim Durchlaufen einer Mehrzahl von nichtlinearen Verbreiterungselementen 7`, oder aber beim Passieren eines entsprechend starken, das heißt in Propagationsrichtung ausgedehnten, nichtlinearen Verbreiterungselements 7` zu einer Instabilität des Laserpulses 5 und letztlich zu dessen völligem Kollaps, insbesondere zur Filamentation, führen.

Um dies zu vermeiden, weist das erfindungsgemäße nichtlineare Verbreiterungselement 7, welches in einem Ausführungsbeispiel in Figur 2b) dargestellt ist, eine Zerstreuungseigenschaft auf, die so gewählt ist, dass die Zerstreuungseigenschaft die Selbstfokussierung des Laserpulses 5 in dem nichtlinearen Verbreiterungselement 7 kompensiert und somit korrigiert. Insbesondere weist bevorzugt jedes nichtlineares Verbreiterungselement 7 der Verbreiterungsstrecke 3 eine entsprechende Zerstreuungseigenschaft auf.

Dabei ist bei dem in Figur 2b) dargestellten Ausführungsbeispiel die Zerstreuungseigenschaft durch eine konkave Form einer Stirnfläche 9, hier konkret der Strahleintrittsfläche 10, des nichtlinearen Verbreiterungselements 7 gebildet. Zusätzlich oder alternativ kann auch eine Strahlaustrittsfläche 12 eine entsprechende konkave Form aufweisen.

Die Zerstreuungseigenschaft, hier insbesondere die konkave Form der Stirnfläche 9, ist bevorzugt auf das Intensitätsprofil des Laserpulses 5 abgestimmt. Insbesondere ist die Stirnfläche 9 hier gaußförmig geformt. Somit wird das Zentrum des Laserpulses 5, welches eine hohe Intensität aufweist, stärker defokussiert als die radial äußeren Ausläufer des Intensitätsprofils, wobei letztlich das Intensitätsprofil des Laserpulses 5 durch das nichtlineare Verbreiterungselement 7 zumindest im Wesentlichen unverändert bleibt, da sich die selbstfokussierende Wirkung des nichtlinearen Mediums einerseits und die defokussierende Eigenschaft des nichtlinearen Verbreiterungselements 7, insbesondere aufgrund der konkaven Form der Stirnfläche 9, gegenseitig zumindest im Wesentlichen aufheben, beziehungsweise die Selbstfokussierung durch die konkave Form der Stirnfläche 9 vorkompensiert wird.

Das nichtlineare Verbreiterungselement 7 weist in Strahlausbreitungsrichtung des Laserpulses gesehen bevorzugt eine Stärke von mindestens 2 mm, vorzugsweise von mindestens 10 mm bis höchstens 50 mm, vorzugsweise von mindestens 15 mm bis höchstens 40 mm, auf. Bevorzugt weist die konkave Form der Stirnfläche 9 eine Ausdehnung in Strahlausbreitungsrichtung von mindestens 1 µm bis höchstens 100 µm, vorzugsweise von mindestens 10 µm bis höchstens 40 µm, vorzugsweise von mindestens 15 µm bis höchstens 30 µm, vorzugsweise von 20 µm, auf.

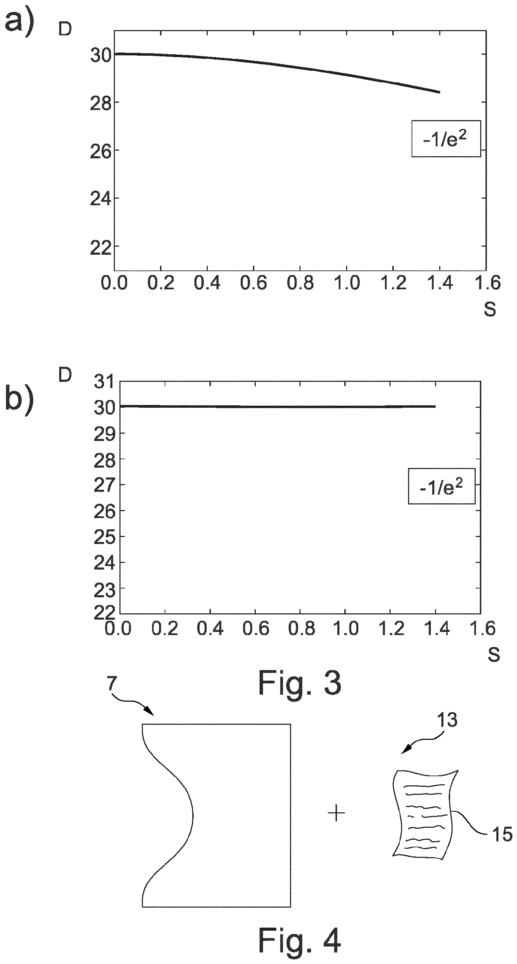

**Fig. 3** zeigt in schematischer, diagrammatischer Darstellung den Effekt der erfindungsgemäßen nichtlinearen Verbreiterungselemente 7 im Vergleich zu herkömmlichen Verbreiterungselementen 7`. Dabei ist bei a) ein Verlauf des Durchmesser D des Laserpulses 5 auf der Höhe des Bruchteils 1/e² der Spitzenintensität aufgetragen gegen die Propagationsstrecke s für eine Mehrzahl von - analog zu dem Aufbau von Figur 1a) - hintereinander angeordneten, herkömmlichen nichtlinearen Verbreiterungselementen 7`. Dabei zeigt sich, dass der Durchmesser D aufgrund der Selbstfokussierung mit zunehmender Propagation abnimmt.

Bei b) ist dieselbe Auftragung für eine Anordnung erfindungsgemäßer nichtlinearer Verbreiterungselemente 7 in dem Aufbau gemäß Figur 1a) dargestellt. Dabei zeigt sich, dass der Durchmesser D entlang der Propagationsstrecke zumindest im Wesentlichen konstant bleibt.

Zurückkommend auf Figur 1a) ist noch festzuhalten, dass die Verbreiterungsstrecke 3 bevorzugt eingerichtet ist, um den Laserpuls 5 mehrfach durch das mindestens eine nichtlineare Verbreiterungselement 7, oder alternativ - wie in Figur 1a) dargestellt - einmalig durch eine Mehrzahl der nichtlinearen Verbreiterungselemente 7, die hier in bevorzugter Ausgestaltung voneinander beabstandet angeordnet sind, zu leiten.

Die nichtlinearen Verbreiterungselemente 7 können in Vakuum oder in einem gasförmigen oder flüssigen Medium, insbesondere Luft, Stickstoff, Kohlendioxid, oder wenigstens einem Edelgas, angeordnet sein. Auch kann ein festes Medium zwischen den nichtlinearen Verbreiterungselementen 7 angeordnet sein.

Die in Figur 1 dargestellte Anordnung kann auch kaskadiert werden, wobei sie eine Mehrzahl von Verbreiterungsstrecken 3 aufweisen kann, wobei zwischen je zwei Verbreiterungsstrecken eine hier nur schematisch angedeutete Pulskompressionseinrichtung 11 zur zeitlichen Kompression des Laserpulses 5 angeordnet sein kann.

Die nichtlinearen Verbreiterungselemente 7 sind bevorzugt als plattenförmige Elemente, insbesondere als Glasplättchen oder Kristallplättchen, oder als Folien ausgebildet.

Das nichtlineare Verbreiterungselement 7 wird bevorzugt ausgelegt, indem für einen bestimmten Laserpuls eine Stärke - in Propagationsrichtung gemessen - für das nichtlineare Verbreiterungselement 7 festgelegt wird, wobei für den bestimmten Laserpuls 5 eine Selbstfokussierung in dem nichtlinearen Verbreiterungselement 7, das die festgelegte Stärke aufweist, bestimmt, insbesondere berechnet wird, wobei eine Zerstreuungseigenschaft für das nichtlineare Verbreiterungselement 7 so bestimmt wird, dass die Zerstreuungseigenschaft die Selbstfokussierung des bestimmten Laserpulses 5 in dem nichtlinearen Verbreiterungselement 7 kompensiert. Die Zerstreuungseigenschaft wird dabei insbesondere durch Simulation oder experimentell bestimmt. Schließlich wird die Zerstreuungseigenschaft an dem nichtlinearen Verbreiterungselement 7 ausgebildet. Hierdurch wird letztlich das nichtlineare Verbreiterungselement 7 erhalten.

Fig. 4 zeigt eine schematische Darstellung eines Ausführungsbeispiels eines Kits 13. Dieses umfasst ein nichtlineares Verbreiterungselement 7, das eine Zerstreuungseigenschaft aufweist, die so auf einen bestimmten Laserpuls 5 abgestimmt ist, dass die Zerstreuungseigenschaft die Selbstfokussierung des bestimmten Laserpulses 5 in dem nichtlinearen Verbreiterungselement 7 kompensiert. Weiterhin umfasst das Kit 13 einen Verwendungshinweis 15, der seinerseits wenigstens eine Anweisung zur Verwendung des nichtlinearen Verbreiterungselements 7 mit dem bestimmten Laserpuls 5 umfasst.

## Patentansprüche

1. Optische Anordnung (1) zur spektralen Verbreiterung von Laserpulsen (5) für die nichtlineare Pulskompression, mit einer Verbreiterungsstrecke (3), die eingerichtet ist, um einen Laserpuls (5) wiederholt durch mindestens ein nichtlineares Verbreiterungselement (7) zu leiten, wobei das nichtlineare Verbreiterungselement (7) eine Zerstreuungseigenschaft aufweist, die so gewählt ist, dass die Zerstreuungseigenschaft eine Selbstfokussierung eines Laserpulses (5) in dem nichtlinearen Verbreiterungselement (7) kompensiert, **dadurch gekennzeichnet, dass** eine Stirnfläche (9) des nichtlinearen Verbreiterungselements (7) eine konkave Form aufweist und wobei die Zerstreuungseigenschaft durch die konkave Form der Stirnfläche (9) bereitgestellt ist.

2. Optische Anordnung (1) nach Anspruch 1, **dadurch gekennzeichnet, dass** die Verbreiterungsstrecke (3) eingerichtet ist, um den Laserpuls (5)
a) mehrfach durch das mindestens eine nichtlineare Verbreiterungselement (7), oder
b) einmalig durch eine Mehrzahl der nichtlinearen Verbreiterungselemente (7) zu leiten.

3. Optische Anordnung (1) nach einem der vorhergehenden Ansprüche, **dadurch gekennzeichnet, dass** die Stirnfläche (9) des nichtlinearen Verbreiterungselements (7) gaußförmig geformt ist.

4. Optische Anordnung (1) nach einem der vorhergehenden Ansprüche, **dadurch gekennzeichnet, dass** das mindestens eine nichtlineare Verbreiterungselement (7) in Vakuum oder in einem gasförmigen oder flüssigen Medium angeordnet ist.

5. Optische Anordnung (1) nach einem der vorhergehenden Ansprüche, **dadurch gekennzeichnet, dass** die optische Anordnung (1) eine Mehrzahl von Verbreiterungsstrecken (3) aufweist, wobei zwischen je zwei Verbreiterungsstrecken (3) eine Pulskompressionseinrichtung (11) zur zeitlichen Kompression des Laserpulses (5) angeordnet ist.

6. Optische Anordnung (1) nach einem der vorhergehenden Ansprüche, **dadurch gekennzeichnet, dass** das nichtlineare Verbreiterungselement (7) als plattenförmiges Element, insbesondere als Plättchen, insbesondere als Glasplättchen oder Kristallplättchen, oder als Folie ausgebildet ist.

7. Optische Anordnung (1) nach einem der vorhergehenden Ansprüche, **dadurch gekennzeichnet, dass** das mindestens eine nichtlineare Verbreiterungselement (7) in Strahlausbreitungsrichtung des Laserpulses (5) eine Stärke von mindestens 2 mm, vorzugsweise von mindestens 10 mm bis höchstens 50 mm, vorzugsweise von mindestens 15 mm bis höchstens 40 mm, aufweist, wobei bevorzugt die konkave Form der Stirnfläche (9) eine Ausdehnung in Strahlausbreitungsrichtung von mindestens 1 µm bis höchstens 100 µm, vorzugsweise von mindestens 10 µm bis höchstens 40 µm, vorzugsweise von mindestens 15 µm bis höchstens 30 µm, vorzugsweise von 20 µm aufweist.

8. Verfahren zum spektralen Verbreitern eines Laserpulses (5), wobei ein Laserpuls (5) wiederholt durch mindestens ein nichtlineares Verbreiterungselement (7) geleitet wird, wobei das nichtlineare Verbreiterungselement (7) eine Zerstreuungseigenschaft aufweist, die so gewählt ist, dass die Zerstreuungseigenschaft eine Selbstfokussierung des Laserpulses (5) in dem nichtlinearen Verbreiterungselement (7) kompensiert, wobei eine Stirnfläche (9) des nichtlinearen Verbreiterungselements (7) eine konkave Form aufweist und wobei die Zerstreuungseigenschaft durch die konkave Form der Stirnfläche (9) bereitgestellt ist.

9. Verfahren zum Auslegen eines nichtlinearen Verbreiterungselements (7) zur Verwendung in einer optischen Anordnung (1) nach einem der Ansprüche 1 bis 7 oder zur Verwendung in einem Verfahren nach Anspruch 8, wobei
- für einen bestimmten Laserpuls (5) eine Stärke für das nichtlineare Verbreiterungselement (7) festgelegt wird, wobei
- für den bestimmten Laserpuls (5) eine Selbstfokussierung in dem nichtlinearen Verbreiterungselement (7) mit der festgelegten Stärke ermittelt wird, wobei
- eine Zerstreuungseigenschaft für das nichtlineare Verstärkungselement (7) so bestimmt wird, dass die Zerstreuungseigenschaft eine Selbstfokussierung des bestimmten Laserpulses (5) in dem nichtlinearen Verbreiterungselement (7) kompensiert, und wobei
- die so bestimmte Zerstreuungseigenschaft an dem nichtlinearen Verbreiterungselement (7) ausgebildet wird, wobei die Zerstreuungseigenschaft als konkave Form an einer Stirnfläche (9) des nichtlinearen Verbreiterungselements (7) ausgebildet wird.

10. Verfahren nach Anspruch 9, **dadurch gekennzeichnet, dass** die Zerstreuungseigenschaft auf ein Intensitätsprofil des bestimmten Laserpulses (5) abgestimmt wird.

## Revendications

1. Ensemble optique (1) destiné à l'élargissement spectral d'impulsions laser (5) pour la compression non linéaire d'impulsions, comprenant un trajet d'élargissement (3) agencé pour guider de manière répétée une impulsion laser (5) à travers au moins un élément d'élargissement non linéaire (7), dans lequel l'élément d'élargissement non linéaire (7) a une propriété de dispersion choisie de telle sorte que la propriété de dispersion compense une auto-focalisation d'une impulsion laser (5) dans l'élément d'élargissement non linéaire (7), **caractérisé en ce qu'**une face frontale (9) de l'élément d'élargissement non linéaire (7) présente une forme concave et dans lequel la propriété de dispersion est fournie par la forme concave de la face frontale (9).

2. Ensemble optique (1) selon la revendication 1, **caractérisé en ce que** le trajet d'élargissement (3) est agencé pour guider l'impulsion laser (5)
a) plusieurs fois à travers ledit au moins un élément d'élargissement non linéaire (7), ou
b) une seule fois à travers une pluralité desdits éléments d'élargissement non linéaires (7).

3. Ensemble optique (1) selon l'une quelconque des revendications précédentes, **caractérisé en ce que** la face frontale (9) de l'élément d'élargissement non linéaire (7) est de forme gaussienne.

4. Ensemble optique (1) selon l'une quelconque des revendications précédentes, **caractérisé en ce que** ledit au moins un élément d'élargissement non linéaire (7) est disposé dans le vide ou dans un milieu gazeux ou liquide.

5. Ensemble optique (1) selon l'une quelconque des revendications précédentes, **caractérisé en ce que** l'ensemble optique (1) présente une pluralité de trajets d'élargissement (3), dans lequel un dispositif de compression (11) d'impulsions est disposé entre chaque paire de trajets d'élargissement (3) pour la compression temporelle de l'impulsion laser (5).

6. Ensemble optique (1) selon l'une quelconque des revendications précédentes, **caractérisé en ce que** l'élément d'élargissement non linéaire (7) est réalisé en tant qu'élément en forme de plaque, en particulier en forme de plaquette, en particulier de plaquette de verre ou de plaquette de cristal, ou de feuille.

7. Ensemble optique (1) selon l'une quelconque des revendications précédentes, **caractérisé en ce que** ledit au moins un élément d'élargissement non linéaire (7) a une épaisseur d'au moins 2 mm, préférablement d'au moins 10 mm à au plus 50 mm, préférablement d'au moins 15 mm à au plus 40 mm, dans la direction de propagation du faisceau de l'impulsion laser (5), dans lequel, de préférence, la forme concave de la face frontale (9) présente une extension dans la direction de propagation du faisceau d'au moins 1 µm à au plus 100 µm, préférablement d'au moins 10 µm à au plus 40 µm, préférablement d'au moins 15 µm à au plus 30 µm, préférablement de 20 µm.

8. Procédé d'élargissement spectral d'une impulsion laser (5), dans lequel une impulsion laser (5) est guidée de manière répétée à travers au moins un élément d'élargissement non linéaire (7), dans lequel l'élément d'élargissement non linéaire (7) présente une propriété de dispersion choisie de telle sorte que la propriété de dispersion compense une auto-focalisation de l'impulsion laser (5) dans l'élément d'élargissement non linéaire (7), dans lequel une face frontale (9) de l'élément d'élargissement non linéaire (7) présente une forme concave et dans lequel la propriété de dispersion est fournie par la forme concave de la face frontale (9).

9. Procédé de conception d'un élément d'élargissement non linéaire (7) à utiliser dans un ensemble optique (1) selon l'une quelconque des revendications 1 à 7 ou à utiliser dans un procédé selon la revendication 8, dans lequel
- pour une impulsion laser (5) déterminée, on définit une intensité pour l'élément d'élargissement non linéaire (7), dans lequel
- pour l'impulsion laser (5) déterminée, on établit une auto-focalisation dans l'élément d'élargissement non linéaire (7) avec l'intensité définie, dans lequel
- une propriété de dispersion pour l'élément d'amplification non linéaire (7) est déterminée de telle sorte que la propriété de dispersion compense une auto-focalisation de l'impulsion laser (5) déterminée dans l'élément d'élargissement non linéaire (7), et dans lequel
- la propriété de dispersion ainsi déterminée est réalisée au niveau de l'élément d'élargissement non linéaire (7), dans lequel la propriété de dispersion est réalisée de forme concave au niveau d'une face frontale (9) de l'élément d'élargissement non linéaire (7).

10. Procédé selon la revendication 9, **caractérisé en ce que** la propriété de dispersion est adaptée à un profil d'intensité de l'impulsion laser (5) déterminée.

## Claims

1. An optical arrangement (1) for the spectral broadening of laser pulses (5) for non-linear pulse compression, having a broadening path (3) which is configured to guide a laser pulse (5) repeatedly through at least one non-linear broadening element (7), wherein the non-linear broadening element (7) has a dispersion property which is selected such that the dispersion property compensates for self-focusing of a laser pulse (5) in the non-linear broadening element (7), **characterized in that** an end face (9) of the non-linear broadening element (7) has a concave shape and wherein the dispersion property is provided by the concave shape of the end face (9).

2. The optical arrangement (1) according to claim 1, **characterized in that** the broadening path (3) is configured to guide the laser pulse (5)
a) several times through the at least one non-linear broadening element (7), or
b) once through a plurality of the non-linear broadening elements (7).

3. The optical arrangement (1) according to one of the preceding claims, **characterized in that** the end face (9) of the non-linear broadening element (7) is Gaussian-shaped.

4. The optical arrangement (1) according to one of the preceding claims, **characterized in that** the at least one non-linear broadening element (7) is arranged in a vacuum or in a gaseous or liquid medium.

5. The optical arrangement (1) according to one of the preceding claims, **characterized in that** the optical arrangement (1) has a plurality of broadening paths (3), a pulse compression device (11) for temporal compression of the laser pulse (5) being arranged between every two broadening paths (3).

6. The optical arrangement (1) according to one of the preceding claims, **characterized in that** the non-linear broadening element (7) is designed as a plate-shaped element, in particular as a platelet, in particular as a glass platelet or crystal platelet, or as a film.

7. The optical arrangement (1) according to one of the preceding claims, **characterized in that** the at least one non-linear broadening element (7) has a thickness in the beam propagation direction of the laser pulse (5) of at least 2 mm, preferably from at least 10 mm to at most 50 mm, preferably from at least 15 mm to at most 40 mm, wherein preferably the concave shape of the end face (9) has an extension in the beam propagation direction of at least 1 µm to at most 100 µm, preferably of at least 10 µm to at most 40 µm, preferably of at least 15 µm to at most 30 µm, preferably of 20 µm.

8. A method for spectrally broadening a laser pulse (5), wherein a laser pulse (5) is repeatedly passed through at least one non-linear broadening element (7), wherein the non-linear broadening element (7) has a dispersion property which is selected in such a way that the dispersion property compensates for self-focusing of the laser pulse (5) in the non-linear broadening element (7), wherein an end face (9) of the non-linear broadening element (7) has a concave shape and wherein the dispersion property is provided by the concave shape of the end face (9).

9. A method for designing a non-linear broadening element (7) for use in an optical arrangement (1) according to any one of claims 1 to 7 or for use in a method according to claim 8, wherein
- a thickness for the non-linear broadening element (7) is determined for a given laser pulse (5), wherein
- self-focusing in the non-linear broadening element (7) with the determined thickness is determined for the determined laser pulse (5), wherein
- a dispersion property for the non-linear broadening element (7) is determined such that the dispersion property compensates for self-focusing of the determined laser pulse (5) in the non-linear broadening element (7), and wherein
- the dispersion property thus determined is formed on the non-linear broadening element (7), the dispersion property being formed as a concave shape on an end face (9) of the non-linear broadening element (7).

10. The method according to claim 9, **characterized in that** the dispersion property is adapted to an intensity profile of the determined laser pulse (5).
